(19) **Europäisches Patentamt / European Patent Office / Office européen des brevets**

(11) **EP 4 186 030 B1**

(12) # FASCICULE DE BREVET EUROPEEN

(45) Date de publication et mention de la délivrance du brevet:
**06.08.2025 Bulletin 2025/32**

(21) Numéro de dépôt: **21745797.7**

(22) Date de dépôt: **16.07.2021**

(51) Classification Internationale des Brevets (IPC):
**G06T 7/64** *(2017.01)* **G06T 3/4023** *(2024.01)*

(52) Classification Coopérative des Brevets (CPC):
**G06T 3/4023; G06T 7/64**

(86) Numéro de dépôt international:
**PCT/EP2021/069941**

(87) Numéro de publication internationale:
**WO 2022/017973 (27.01.2022 Gazette 2022/04)**

(54) **PROCÉDÉ DE DÉTERMINATION DE ZONES DE VALLÉES ACCESSIBLES PAR UN AÉRONEF**

VERFAHREN ZUR BESTIMMUNG VON TALBEREICHEN, DIE VON EINEM FLUGZEUG ZUGÄNGLICH SIND

METHOD FOR DETERMINING VALLEY AREAS ACCESSIBLE BY AN AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.07.2020 FR 2007650**

(43) Date de publication de la demande:
**31.05.2023 Bulletin 2023/22**

(73) Titulaire: **THALES**
**92400 Courbevoie (FR)**

(72) Inventeurs:
- **THIRIET, Aurélien**
  **33700 MERIGNAC (FR)**
- **GAYRAUD, Lionel**
  **91120 PALAISEAU (FR)**

(74) Mandataire: **Lavoix**
**2, place d'Estienne d'Orves**
**75441 Paris Cedex 09 (FR)**

(56) Documents cités:
- **ROBERT NAGY: "Automatic detection of valley forms", MASTER THESIS, 9 November 2015 (2015-11-09), Oslo, Norway, XP055790226, Retrieved from the Internet <URL:https://www.duo.uio.no/bitstream/handle/10852/47643/Masters_pdf.pdf?sequence=1&isAllowed=y>**
- **THEUNISSEN E ET AL: "Terrain Following and Terrain Avoidance with Synthetic Vision", DIGITAL AVIONICS SYSTEMS CONFERENCE, 2005. DASC 2005. THE 24TH WASHINGTON, DC, USA 30 OCTOBER - 03 NOVEMBER 2005, IEEE, PISCATAWAY, NJ, USA, vol. 1, 30 October 2005 (2005-10-30), pages 4.D.2 - 1, XP010868258, ISBN: 978-0-7803-9307-3**

EP 4 186 030 B1

**Description**

La présente invention concerne un procédé de détermination de zones de vallées accessibles par un aéronef. La présente invention concerne aussi un dispositif électronique associé. La présente invention concerne également un aéronef comprenant un tel dispositif électronique.

Dans le domaine de l'aéronautique, les vallées sont généralement privilégiées par les pilotes en vol basse altitude afin de bénéficier des effets de masquages optiques, magnétiques et acoustiques naturellement apportés par le terrain.

Cependant, toutes les vallées ne sont pas praticables, et ce pour deux raisons. D'abord, les aspects de dynamique de vol d'un aéronef à voilure fixe ne permettent pas d'adresser des rayons de courbure trop fort. Ensuite, les pilotes souhaitent pouvoir faire demi-tour dans la vallée sans être obligé de remonter en altitude et donc de potentiellement se découvrir en sortant du masquage naturel, ce qui exclut les vallées trop étroites.

Aussi, avant de s'engager dans une vallée, le pilote doit s'assurer qu'elle répond à des caractéristiques opérationnelles prédéfinies afin de garantir sa survie une fois engagé. Par exemple, la vallée doit être volable (au sens dynamique de vol) et permettre de faire demi-tour sans se découvrir. Toutes ces contraintes peuvent être satisfaites en respectant une seule contrainte « enveloppe » qui est une largeur suffisante de la vallée.

Le pilote effectue, ainsi, une estimation « à l'œil » à partir d'une carte de navigation, d'éventuelles informations visuelles externes et sa connaissance éventuelle du théâtre d'opérations.

Néanmoins, une telle estimation n'est pas entièrement fiable, et présente des risques accrus de prise de mauvaise décision en vol. En effet, selon le modèle de conscience de la situation proposé par Endsley en 1988, une bonne prise de décision demande une bonne compréhension de la situation et une gestion adéquate de l'urgence de la décision. Cependant, une bonne conscience de la situation n'est pas suffisante pour assurer une bonne prise de décision. Par exemple, Endsley en 1995 a identifié que dans 27% des accidents aéronautiques, les pilotes avaient une bonne conscience de la situation, et ont malgré tout pris une mauvaise décision. La raison principale en est des environnements très complexes ou des ressources cognitives limitées par le temps de décision ou les contraintes de la situation (conditions de stress).

En particulier, la prise de décisions avec des opérateurs expérimentés n'est généralement pas un problème quand la situation est connue et bien définie. Cependant, quand la situation est complètement nouvelle et incertaine, la prise de décisions, même pour des opérateurs expérimentés, est difficile. De plus, quand la survie est en jeu, l'instinct pousse à s'éloigner de la menace, parfois en ajoutant des nouveaux dangers avec un risque de dégrader les chances de survie.

Par ailleurs, la thèse de Master par Robert Nagy (Université d'Oslo) intitulée "Automatic detection of valley forms" et publiée le 3 juillet 2015 divulgue l'analyse d'images topographiques pour déterminer les caractéristiques de certaines vallées, en l'occurrence la courbure, et l'article "Terrain Following and Terrain Avoidance with Synthetic Vision" par E. Theunissen et al. publié à la conférence "DIGITAL AVIONICS SYSTEMS CONFERENCE, 2005" qui s'est déroulée à WASHINGTON, DC, Etats-Unis, entre le 30 octobre et 3 novembre 2005 traite de la simulation de vol.

Il existe donc un besoin pour un procédé permettant d'améliorer la détermination de zones de vallées accessibles par un aéronef.

A cet effet, la présente description a pour objet un procédé selon la revendication 1.

Selon d'autres aspects avantageux de l'invention, le procédé comprend une ou plusieurs des caractéristiques des revendications 2 à 7.

La présente description concerne, en outre, un dispositif électronique selon la revendication 8.

La présente description concerne aussi un aéronef selon la revendication 9.

La présente description se rapporte également à un produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en œuvre d'un procédé de détermination tel que précédemment décrit lorsque le programme d'ordinateur est mis en œuvre sur l'unité de traitement des données.

La présente description concerne aussi un support lisible d'informations sur lequel est mémorisé un produit programme d'ordinateur tel que précédemment décrit.

D'autres caractéristiques et avantages de l'invention apparaîtront à la lecture de la description qui suit de modes de réalisation de l'invention, donnée à titre d'exemple uniquement, et en référence aux dessins qui sont :

- [Fig 1] figure 1, une représentation schématique d'un exemple de dispositif électronique,
- [Fig 2] figure 2, un organigramme d'un exemple d'un procédé de détermination de zones de vallées, et
- [Fig 3] figure 3, une représentation schématique d'une élévation de terrain pour un point central et les huit voisins alentours de ce point central.

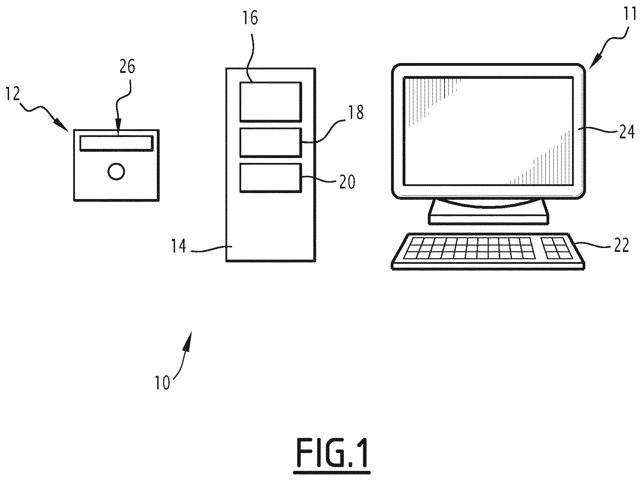

Un exemple d'un dispositif électronique 10 configuré pour déterminer des zones de vallées accessibles par un aéronef est illustré par la figure 1.

Les zones de vallées sont des zones d'un environnement qui sont destinées à être survolées par l'aéronef. Une zone de vallée est définie comme étant une dépression géographique généralement de forme allongée et façonnée dans un relief (par exemple par un cours d'eau ou un glacier). En d'autres termes, une vallée se matérialise par un creux dans un terrain.

Une zone de vallée est considérée accessible par un aéronef lorsque la largeur de la ou des vallées qui la composent est supérieure ou égale à une largeur prédéfinie. La vallée répond, ainsi, à des caractéristiques opérationnelles prédéfinies, par exemple, selon lesquelles la vallée permet une bonne dynamique de vol (rayons de courbure limités) et de faire demi-tour sans se découvrir.

Dans l'exemple illustré par la figure 1, le dispositif électronique 10 comprend un calculateur 11 et un produit programme d'ordinateur 12.

Le calculateur 11, est de préférence, un ordinateur.

Plus généralement, le calculateur 11 est un calculateur électronique propre à manipuler et/ou transformer des données représentées comme des quantités électroniques ou physiques dans des registres de calculateur 11 et/ou des mémoires en d'autres données similaires correspondant à des données physiques dans des mémoires, des registres ou d'autres types de dispositifs d'affichage, de transmission ou de mémorisation.

Le calculateur 11 est en interaction avec le produit programme d'ordinateur 12.

Comme illustré par la figure 1, le calculateur 11 comporte un processeur 14 comprenant une unité de traitement de données 16, des mémoires 18 et un lecteur 20 de support d'informations. Dans l'exemple illustré par la figure 1, le calculateur 11 comprend une interface homme-machine 22, tel qu'un clavier, et un afficheur 24.

Le produit programme d'ordinateur 12 comporte un support d'informations 26.

Le support d'information 26 est un support lisible par le calculateur 11, usuellement par l'unité de traitement de données 16. Le support lisible d'informations 26 est un médium adapté à mémoriser des instructions électroniques et capable d'être couplé à un bus d'un système informatique.

A titre d'exemple, le support d'informations 26 est une clé USB, une disquette ou disque souple (de la dénomination anglaise « *Floppy disc* »), un disque optique, un CD-ROM, un disque magnéto-optique, une mémoire ROM, une mémoire RAM, une mémoire EPROM, une mémoire EEPROM, une carte magnétique ou une carte optique.

Sur le support d'informations 26 est mémorisé le programme d'ordinateur 12 comprenant des instructions de programme.

Le programme d'ordinateur 12 est chargeable sur l'unité de traitement de données 16 et est adapté pour entraîner la mise en œuvre d'un procédé de détermination de zones de vallées lorsque le programme d'ordinateur 12 est mis en œuvre sur l'unité de traitement 16 du calculateur 11.

Dans un autre exemple, le calculateur 11 est réalisé sous la forme d'un ou plusieurs composants logiques programmables, tel que des FPGA (de l'anglais Field Programmable Gate Array), ou encore sous la forme d'un ou plusieurs circuits intégrés dédiés, tel que des ASIC (de l'anglais Application Specific Integrated Circuit). Le calculateur 11 est dans ce cas configuré pour mettre en œuvre un procédé de détermination comme cela sera décrit dans la suite de la description.

Le dispositif électronique 10 est, par exemple, intégralement intégré dans un aéronef.

En variante, le dispositif électronique 10 est, par exemple, disposé en partie dans une unité au sol et en partie dans un aéronef. Dans ce cas, le dispositif électronique 10 comprend, par exemple, un premier calculateur 11 au sol et un deuxième calculateur 11 intégré dans l'aéronef 14.

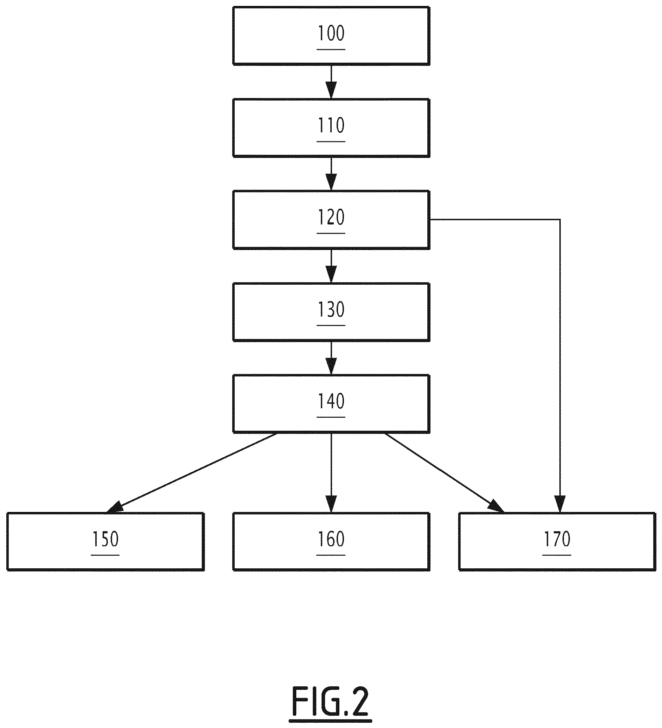

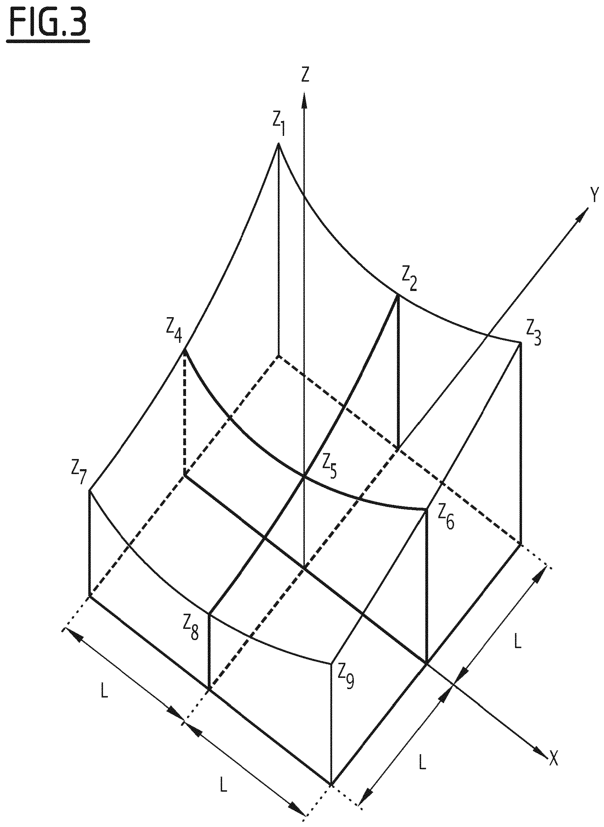

Le fonctionnement du dispositif électronique 10 va maintenant être décrit en référence à la figure 2, qui illustre schématiquement un exemple de mise en œuvre d'un procédé de détermination de zones de vallées accessibles par un aéronef et à la figure 3 qui illustre plus en détails un exemple d'une étape de ce procédé.

Le procédé de détermination est, par exemple, propre à être mis en œuvre lors d'une phase de préparation du vol de l'aéronef 14 de sorte à définir en amont des trajectoires pour l'aéronef privilégiant les zones de vallées.

En variante ou en complément, le procédé de détermination est propre à être mis en œuvre lors du vol de l'aéronef 14. Cela permet, par exemple, au pilote de privilégier les zones de vallées s'il souhaite ou doit modifier sa trajectoire de vol.

Les différentes étapes du procédé de détermination sont mises en œuvre par le dispositif électronique 10, notamment par le calculateur 11, c'est-à-dire sont mises en œuvre par ordinateur.

Le procédé de détermination comprend une étape 100 d'obtention d'une image initiale $IM_I$ d'un environnement comprenant des zones de vallées.

L'image initiale $IM_I$ est, par exemple, une image numérique de terrain, c'est-à-dire une représentation numérique des altitudes d'un terrain (réel ou fictif). L'image initiale $IM_I$ a, par exemple, été obtenue au moyen de mesures effectuées par un ou des capteurs. Par exemple, l'image initiale $IM_I$ a été acquise par un ou des capteurs lors du vol d'un aéronef portant le ou lesdits capteurs. Le ou au moins un capteur est, par exemple, une caméra stéréoscopique ou un lidar. En variante, l'image initiale $IM_I$ a été acquise par un système satellite.

Le procédé de détermination comprend une étape 110 de traitement de l'image initiale $IM_I$ de sorte à éliminer les éléments imagés sur l'image initiale $IM_I$ dont la dimension est inférieure à une dimension prédéterminée pour obtenir une première image traitée $IM1_T$. La dimension prédéterminée a été choisie de sorte à éliminer les vallées (trop étroites) de largeur inférieure à la largeur minimale des vallées recherchées, c'est-à-dire des vallées considérées accessibles par l'aéronef. Par exemple, la dimension prédéterminée a été choisie de sorte à éliminer les vallées de largeur inférieure à 3000 mètres.

L'étape de traitement 110 comprend notamment la réduction de la résolution de l'image initiale $IM_I$ de sorte à éliminer les éléments imagés sur l'image initiale $IM_I$ dont la dimension est inférieure à une dimension prédéterminée.

Pour cela, la fréquence d'échantillonnage est choisie en fonction de la dimension prédéterminée. Cela revient en fait à appliquer la réciproque du théorème de Shannon selon laquelle « l'échantillonnage d'une image avec des échantillons régulièrement espacés peut décrire un signal à condition que ledit signal ne contienne aucune fréquence supérieure à la moitié de la fréquence d'échantillonnage, dite fréquence de Nyquist ».

A l'issue de cette réduction, les détails du modèle numérique de terrain inférieurs à la dimension prédéterminée sont éliminés, et par là-même les vallées d'une taille inférieure à cette dimension.

Avantageusement, l'étape de traitement 110 comprend également l'application d'un filtre de flou Gaussien sur l'image de résolution réduite obtenue de sorte à obtenir la première image traitée $IM1_T$.

Le filtre de flou Gaussien est un filtre numérique permettant de flouter une image numérique en atténuant les changement brusque d'intensité, et ce en calculant la moyenne pondérée des valeurs du voisinage de chaque pixel. Les pixels du voisinage qui sont proches du pixel central ont un poids plus fort (plus d'influence) que ceux qui sont plus éloignés. Les coefficients de pondération à appliquer se calculent comme suit : coefficients du noyau gaussien $Ai,j = exp(-(i^2+j^2)/2\sigma^2)$ où i est la distance à l'origine selon l'axe horizontal, j est la distance à l'origine selon l'axe vertical, et $\sigma$ est l'écart-type de la distribution gaussienne.

En appliquant un tel filtre de flou gaussien, les « effets d'escalier » liées à la réduction de résolution sont réduits sur la première image traitée $IM1_T$.

Le procédé de détermination comprend une étape 120 de détermination de la courbure de chaque élément imagé sur la première image traitée $IM1_T$. Les zones de vallées accessibles par l'aéronef sont les éléments imagés sur la première image traitée $IM1_T$ dont la courbure est strictement inférieure à zéro (négative).

L'étape de détermination de courbure 120 se fonde, par exemple, sur l'article de Zevenbergen, L.W., Thorne, C.R., 1987, intitulé « Quantitative analysis of land surface topography », publié dans Earth surface processes and landforms , volume 12, pages 47 à 56.

En particulier, selon cet article, la courbure du plan en un point quelconque du terrain, dit point central, est obtenue via une identification polynomiale basée sur ce point central et ses huit plus proches voisins alentours au sein d'une grille cartésienne.

Plus précisément, en référence à la figure 3, on note $Z_1$ à $Z_9$ l'élévation du terrain en chacun des neuf points considérés (le point 5 étant le point central, les points 1 à 4 et 6 à 9 les points voisins).

Dix coefficients (notés A, B, C, D, E, F, G, H, I, J) sont obtenus par identification avec un polynôme de Lagrange $Z(x,y) = Ax^2y^2 + Bx^2y + Cxy^2 + Dx^2 + Ey^2 + Fxy, +Gx + Hy + I$, supposé approximer la hauteur du terrain en tout point $(x, y)$ situé dans la zone du plan délimitée par les huit voisins.

La courbure du terrain est alors obtenue en dérivant au voisinage du point central : *Courbure* $\equiv \partial^2 Z / \partial^2 S = 2(Dcos^2\varphi + Esin^2\varphi + Fcos\varphi sin\varphi)$ où $\varphi$ est une direction azimutale.

Afin de définir une grandeur caractérisant le point central (et ne dépendant donc pas de la direction azimutale $\varphi$), il est défini une grandeur combinant la courbure dans deux directions complémentaires : la direction de plus grande pente $\theta = arctan(-H/-G)$ et son complément $\phi \equiv \theta + \dfrac{\pi}{2}$. La grandeur caractéristique ainsi obtenue est appelée « courbure de terrain », et vaut $2(D + E)$.

Le procédé de détermination comprend une étape 130 de traitement de la première image traitée $IM1_T$ de sorte à affecter une valeur nulle aux éléments imagés sur la première image traitée $IM1_T$ dont la courbure est positive pour obtenir une deuxième image traitée $IM2_T$. Cela revient à ne garder que les « creux » sur la deuxième image traitée $IM2_T$, de tels creux étant les zones de vallées accessibles par l'aéronef.

Avantageusement, le procédé comprend une étape 140 de traitement de la deuxième image traitée $IM2_T$ pour obtenir une image finale $IM_F$. L'étape de traitement de la deuxième image traitée $IM2_T$ comprend par exemple :

- la normalisation (entre 0 et 1) de l'histogramme de la deuxième image traitée $IM2_T$, et/ou
- l'augmentation du contraste de la deuxième image traitée $IM2_T$ d'une valeur prédéterminée (par exemple à la puissance 100), le cas échéant après normalisation de l'histogramme, et/ou
- l'augmentation de la résolution de la deuxième image traitée $IM2_T$, le cas échéant après normalisation de l'histogramme et augmentation du contraste, de sorte que la résolution de l'image finale $IM_F$ soit égale à la résolution de l'image initiale $IM_I$.

La normalisation et l'augmentation de contraste permettent d'obtenir une image finale $IM_F$ dans laquelle les zones de vallées déterminées sont mises en évidence sur l'image finale $IM_F$ avec une plage de valeurs correspondant à la sensibilité de l'œil humain. Ces deux actions permettent également d'obtenir des images exploitables par un réseau neuronal.

L'augmentation de la résolution permet d'obtenir une image finale $IM_F$ de même dimension que l'image initiale $IM_I$, ce qui permet d'exploiter plus facilement l'image finale $IM_F$, par exemple, en la comparant à l'image initiale $IM_I$.

Optionnellement, le procédé comprend une étape 150 d'affichage de l'image finale $IM_F$ sur un afficheur, tel que l'afficheur 24 du calculateur 11.

Dans un exemple, l'image finale $IM_F$ est, par exemple, superposée sur l'image initiale $IM_I$.

Avantageusement, lorsque l'afficheur 24 est disposé dans un aéronef et que l'aéronef est en vol, l'image finale $IM_F$ est, de préférence, affichée en fonction de la position de l'aéronef déterminée en temps réel. Cela permet d'afficher les zones de vallées accessibles déterminées les plus pertinentes en fonction de la position de l'aéronef.

Optionnellement, le procédé comprend une étape 160 d'utilisation de l'image finale $IM_F$ comme une carte de coût dans un outil de détermination de trajectoire de vol pour l'aéronef (par exemple utilisant un solveur de type Eikonal).

L'étape d'utilisation 160 comprend, par exemple, la définition d'un critère de coût visant à favoriser les zones de vallées en fonction de l'image finale $IM_F$, et la détermination de trajectoires de vol pour l'aéronef satisfaisant le critère de coût défini.

Plus généralement, l'homme du métier comprendra que l'image finale $IM_F$ obtenue est propre à être fournie en entrée de tout système utilisant les informations de cette image une telle image, notamment dans le domaine de l'intelligence artificiel, en entrée d'un réseau de neurones convolutifs pour analyse d'image.

Avantageusement, le procédé de détermination comprend une étape 170 de détermination d'une trajectoire de vol pour l'aéronef en fonction des zones de vallées accessibles déterminées. L'étape de détermination 170 est, par exemple, mise en œuvre juste après l'étape de traitement 140, ou juste après l'étape de détermination 120. Pour faciliter la prise de décision, l'étape de modification 170 est, avantageusement, effectuée à la suite de l'étape d'affichage 150.

Lorsque l'aéronef survole ledit environnement, l'étape de détermination 170 comprend, avantageusement, la modification de la trajectoire de l'aéronef en fonction des zones de vallées accessibles déterminées. La modification de la trajectoire s'effectue, ainsi, en privilégiant les vallées qui ont été déterminées accessibles par l'aéronef.

Ainsi, le présent procédé permet d'assister les pilotes dans leurs prises de décision sur leurs navigations grâce à une détermination des zones de vallées accessibles par l'aéronef. Le présent procédé fournit notamment une meilleure conscience de la situation au pilote.

Le présent procédé permet notamment d'identifier les vallées compatibles à partir d'un modèle numérique de terrain et de superposer par exemple le résultat obtenu à une carte numérique afin de mettre visuellement en exergue les bonnes vallées. Avantageusement, le résultat obtenu peut être mathématiquement utilisé comme carte de coût ou carte de coût partielle à agréger, vu d'un solveur de type eikonal afin d'inciter le solveur à trouver un chemin d'un point A à un point B passant dans les vallées identifiées par le procédé.

Ainsi, le présent procédé permet d'améliorer la détermination de zones de vallées accessibles par un aéronef, et ainsi d'améliorer la prise de décision d'un pilote face à des situations imprévues.

L'homme du métier comprendra que les modes de réalisation décrits précédemment sont susceptibles d'être combinés entre eux lorsqu'une telle combinaison est couverte par les revendications.

## Revendications

1. Procédé de détermination de zones de vallées accessibles par un aéronef, une zone de vallée étant considérée accessible par un aéronef lorsque la largeur de la ou des vallées qui la composent est supérieure ou égale à une largeur prédéfinie, le procédé étant mis en œuvre par un dispositif électronique, le procédé comprenant les étapes suivantes :

   a. l'obtention d'une image initiale ($IM_I$) d'un environnement comprenant des zones de vallées,
   b. le traitement de l'image initiale ($IM_I$) de sorte à éliminer les éléments imagés sur l'image initiale ($IM_I$) dont la dimension est inférieure à une dimension prédéterminée pour obtenir une première image traitée ($IM1_T$), la dimension prédéterminée étant choisie de sorte à éliminer les vallées de largeur inférieure à la largeur prédéfinie,
   c. la détermination de la courbure de chaque élément imagé sur la première image traitée ($IM1_T$), les zones de vallées accessibles par l'aéronef étant les éléments imagés sur la première image traitée ($IM1_T$) dont la courbure est strictement inférieure à zéro, et
   d. la détermination d'une trajectoire de vol pour l'aéronef en fonction des zones de vallées accessibles déterminées.

2. Procédé selon la revendication 1, dans lequel le procédé comprend une étape de traitement de la première image traitée ($IM1_T$) de sorte à affecter une valeur nulle aux éléments imagés sur la première image traitée ($IM1_T$) dont la courbure est positive pour obtenir une deuxième image traitée ($IM2_T$).

3. Procédé selon la revendication 2, dans lequel le procédé comprend une étape de traitement de la deuxième image traitée ($IM2_T$) pour obtenir une image finale ($IM_F$), l'étape de traitement de la deuxième image traitée ($IM2_T$) comprenant :

   a. la normalisation de l'histogramme de la deuxième image traitée ($IM2_T$), et/ou
   b. l'augmentation du contraste de la deuxième image traitée ($IM2_T$) d'une valeur prédéterminée, le cas échéant après normalisation de l'histogramme, et/ou

c. l'augmentation de la résolution de la deuxième image traitée (IM2$_T$), le cas échéant après normalisation de l'histogramme et augmentation du contraste, de sorte que la résolution de l'image finale (IM$_F$) soit égale à la résolution de l'image initiale (IM$_I$).

**4.** Procédé selon la revendication 3, dans lequel le procédé comprend une étape d'affichage de l'image finale (IM$_F$) sur un afficheur (24), l'afficheur (24) étant avantageusement disposé dans un aéronef et l'image finale (IM$_F$) étant, de préférence, affichée en fonction de la position de l'aéronef déterminée en temps réel.

**5.** Procédé selon la revendication 3 ou 4, dans lequel le procédé comprend en outre :

a. une étape de définition d'un critère de coût visant à favoriser les zones de vallées en fonction de l'image finale (IM$_F$), et

b. une étape de détermination de trajectoires de vol pour l'aéronef satisfaisant le critère de coût défini.

**6.** Procédé selon l'une quelconque des revendications 1 à 5, dans lequel l'étape de traitement de l'image initiale (IM$_I$) comprend :

a. la réduction de la résolution de l'image initiale (IM$_I$) de sorte à éliminer les éléments imagés sur l'image initiale (IM$_I$) dont la dimension est inférieure à la dimension prédéterminée, et

b. l'application d'un filtre de flou Gaussien sur l'image de résolution réduite obtenue de sorte à obtenir la première image traitée (IM1$_T$).

**7.** Procédé selon l'une quelconque des revendications 1 à 6, dans lequel lors de l'étape d'obtention, l'image initiale (IM$_I$) de l'environnement est obtenue par l'intermédiaire de mesures effectuée par un capteur, tel qu'une caméra ou un satellite.

**8.** Dispositif électronique (10) configuré pour mettre en œuvre un procédé de détermination selon l'une quelconque des revendications 1 à 7.

**9.** Aéronef comprenant un dispositif électronique (10) selon la revendication 8.

## Patentansprüche

**1.** Verfahren zur Bestimmung von Talbereichen, die von einem Luftfahrzeug zugänglich sind, wobei ein Talbereich als von einem Luftfahrzeug betrachtet wird, wenn die Breite des oder der Täler, aus denen sie besteht, größer als oder gleich wie eine vordefinierte Breite ist, wobei das Verfahren von einer elektronischen Vorrichtung implementiert wird, das Verfahren umfassend die folgenden Schritte:

**a.** Erlangen eines Anfangsbilds (IM$_I$) einer Umgebung, umfassend Talbereiche,

**b.** Verarbeiten des Anfangsbilds (IM$_I$), sodass die auf dem Anfangsbild (IM$_I$) abgebildeten Elemente, deren Größe kleiner als eine vorbestimmte Größe ist, eliminiert werden, um ein erstes verarbeitetes Bild (IM1$_T$) zu erlangen, wobei die vorbestimmte Größe gewählt ist, um Täler mit einer geringeren Breite als die vorbestimmte Breite zu eliminieren,

**c.** Bestimmen der Krümmung von jedem Element, das auf dem ersten verarbeiteten Bild (IM1$_T$) abgebildet ist, wobei die Talbereiche, die für das Luftfahrzeug zugänglich sind, Elemente sind, die auf dem ersten verarbeiteten Bild (IM1$_T$) abgebildet sind, deren Krümmung strikt unter null ist, und

**d.** Bestimmen einer Flugbahn für das Luftfahrzeug abhängig von bestimmten zugänglichen Talbereichen.

**2.** Verfahren nach Anspruch 1, wobei das Verfahren einen Verarbeitungsschritt des ersten verarbeiteten Bilds (IM1$_T$) umfasst, um den Elementen, die auf dem ersten verarbeiteten Bild (IM1$_T$) abgebildet sind, deren Krümmung positiv ist, einen Wert null zuzuweisen, um ein zweites verarbeitetes Bild (IM2$_T$) zu erlangen.

**3.** Verfahren nach Anspruch 2, wobei das Verfahren einen Verarbeitungsschritt des zweiten verarbeiteten Bilds (IM2$_T$) umfasst, um ein endgültiges Bild (IM$_F$) zu erlangen, der Verarbeitungsschritt des zweiten verarbeiteten Bilds (IM2$_T$) umfassend:

a. Normalisieren des Histogramms des zweiten verarbeiteten Bilds (IM2$_T$), und/oder

b. Erhöhen des Kontrasts des zweiten verarbeiteten Bilds (IM2$_T$) um einen vorbestimmten Wert, gegebenenfalls nach Normalisieren des Histogramms, und/oder

c. Erhöhen der Auflösung des zweiten verarbeiteten Bilds (IM2$_T$), gegebenenfalls nach Normalisieren des Histogramms und Erhöhen des Kontrasts, sodass die Auflösung des endgültigen Bilds (IM$_F$) gleich wie die Auflösung des Anfangsbilds (IM$_I$) ist.

**4.** Verfahren nach Anspruch 3, wobei das Verfahren einen Anzeigeschritt des endgültigen Bilds (IM$_F$) auf einer Anzeige (24) umfasst, wobei die Anzeige (24) vorteilhafterweise in einem Luftfahrzeug angeordnet ist und das endgültige Bild (IM$_F$) vorzugsweise abhängig von der Position des Luftfahrzeugs angezeigt wird, die in Echtzeit bestimmt wird.

5. Verfahren nach Anspruch 3 oder 4, wobei das Verfahren ferner Folgendes umfasst:

   a. einen Definitionsschritt eines Kostenkriteriums, das darauf abzielt, die Talbereiche abhängig von dem endgültigen Bild (IM$_F$) zu bevorzugen, und
   b. einen Bestimmungsschritt von Flugbahnen für das Luftfahrzeug, die das definierte Kostenkriterium erfüllen.

6. Verfahren nach einem der Ansprüche 1 bis 5, wobei der Verarbeitungsschritt des Anfangsbilds (IM$_I$) Folgendes umfasst:

   a. Reduzieren der Auflösung des Anfangsbilds (IM$_I$), sodass die auf dem Anfangsbild (IM$_I$) abgebildeten Elemente, deren Größe kleiner als die vorbestimmte Größe ist, eliminiert werden, und
   b. Anwenden eines Gaußschen Unschärfefilters auf das erlangte Bild mit reduzierter Auflösung, um das erste verarbeitete Bild (IM1$_T$) zu erlangen.

7. Verfahren nach einem der Ansprüche 1 bis 6, wobei in dem Erlangungsschritt das Anfangsbild (IM$_I$) der Umgebung mittels Messungen erlangt wird, die von einem Sensor, wie beispielsweise einer Kamera oder einem Satelliten, durchgeführt werden.

8. Elektronische Vorrichtung (10), die konfiguriert ist, um ein Bestimmungsverfahren nach einem der Ansprüche 1 bis 7 durchzuführen.

9. Luftfahrzeug, umfassend eine elektronische Vorrichtung (10) nach Anspruch 8.

**Claims**

1. A method for determining valley areas accessible by an aircraft, a valley zone being considered accessible by an aircraft when the width of the valley or valleys that form the valley zone is greater than or equal to a predefined width, the method being implemented by an electronic device, the method comprising the following steps:

   **a.** obtaining an initial image (IM$_I$) of an environment comprising valley areas,
   **b.** processing of the initial image (IM$_I$) so as to eliminate the imaged elements on the initial image (IM$_I$), the dimension of which is smaller than a predetermined dimension, to obtain a first processed image (IM1$_T$), the predetermined dimension being chosen so as to remove valleys with a width less than the predefined width, and
   **c.** determining the curvature of each imaged element in the first processed image (IM1$_T$), the valley areas accessible by the aircraft being the imaged elements, in the first processed image (IM1$_T$), the curvature of which is strictly less than zero, and
   **d.** determining a flight path for the aircraft, depending on the determined accessible valley areas.

2. The method according to claim 1, wherein the method comprises a step of processing the first processed image (IM1$_T$) so as to assign a zero value to the imaged elements on the first processed image (IM1$_T$) the curvature of which is positive, so as to obtain a second processed image (IM2$_T$).

3. The method according to claim 2, wherein the method comprises a step of processing the second processed image (IM2$_T$) so as to obtain a final image (IM$_F$), the step of processing the second processed image (IM2$_T$) comprising:

   a. the normalization of the histogram of the second processed image (IM2$_T$), and/or
   b. the increase of the contrast of the second processed image (IM2$_T$) by a predetermined value, where appropriate after normalizing the histogram, and/or
   c. the increase of the resolution of the second processed image (IM2$_T$), where appropriate after normalizing the histogram and increasing the contrast, so that the resolution of the final image (IM$_F$) is equal to the resolution of the initial image (IM$_I$).

4. The method according to claim 3, wherein the method comprises a step of displaying the final image (IM$_F$) on a display (24), the display (24) being advantageously installed in an aircraft and the final image (IM$_F$) preferentially being displayed according to the position of the aircraft, determined in real time.

5. The method according to claims 3 or 4, wherein the method further comprises:

   a. a step of defining a cost criterion aimed at favoring the valley areas according to the final image (IM$_F$), and
   b. a step of determining flight paths for the aircraft meeting the defined cost.

6. The method according to any one of claims 1 to 5, wherein the step of processing the initial image (IM$_I$)

comprises:

  a. reducing the resolution of the initial image ($IM_I$) so as to remove the imaged elements on the initial image ($IM_I$) the dimension of which is less than the predetermined dimension, and
  b. applying a Gaussian blur filter to the resulting reduced resolution image so as to obtain the first processed image ($IM1_T$).

7. The method according to any one of claims 1 to 6, wherein in the obtaining step, the initial image ($IM_I$) of the environment is obtained by means of measurements made by a sensor, such as a camera or a satellite.

8. An electronic device (10) configured for implementing a method according to any one of claims 1 to 7.

9. An aircraft comprising an electronic device (10) according to claim 8.

**FIG.1**

```
┌─────────────────────┐
│        100          │
└─────────────────────┘
          │
          ▼
┌─────────────────────┐
│        110          │
└─────────────────────┘
          │
          ▼
┌─────────────────────┐
│        120          │──────────────┐
└─────────────────────┘              │
          │                          │
          ▼                          │
┌─────────────────────┐              │
│        130          │              │
└─────────────────────┘              │
          │                          │
          ▼                          │
┌─────────────────────┐              │
│        140          │              │
└─────────────────────┘              │
     ╱    │    ╲                     │
    ╱     │     ╲                    │
   ▼      ▼      ▼                   ▼
┌───────┐ ┌───────┐ ┌───────────────────┐
│  150  │ │  160  │ │       170         │
└───────┘ └───────┘ └───────────────────┘
```

# FIG.2

# FIG.3

## RÉFÉRENCES CITÉES DANS LA DESCRIPTION

**Littérature non-brevet citée dans la description**

- **ROBERT NAGY**. *Automatic detection of valley forms*, 03 July 2015
- **E. THEUNISSEN et al.** Terrain Following and Terrain Avoidance with Synthetic Vision. *DIGITAL AVIONICS SYSTEMS CONFERENCE, 2005*, 30 October 2005
- **ZEVENBERGEN, L.W.** ; **THORNE, C.R.** Quantitative analysis of land surface topography. *Earth surface processes and landforms*, 1987, vol. 12, 47-56